# FASCICULE DE BREVET EUROPEEN

(11) **EP 3 545 589 B1**
(45) Date de publication et mention de la délivrance du brevet: **27.12.2023**
(21) Numéro de dépôt: 17816908.2
(22) Date de dépôt: 22.11.2017
(51) Int. Cl.: B60L 3/04, H01H 31/00

(54) **SYSTÈME DE RACCORDEMENT ÉLECTRIQUE SÉCURISÉ**
SICHERES ELEKTRISCHES ANSCHLUSS-SYSTEM
SECURED ELECTRICAL CONNECTION SYSTEM

(30) Priorité: 28.11.2016 FR 1661564
(43) Date de publication de la demande: 02.10.2019
(73) Titulaire: Commissariat à l'énergie atomique et aux énergies alternatives, 75015 Paris (FR)
(72) Inventeur: GAILLARD, Frédéric, 38500 Voiron (FR); CHATROUX, Daniel, 38470 Teche (FR)
(74) Mandataire: Cabinet Beaumont
(86) Numéro de dépôt international: PCT/FR2017/053217
(87) Numéro de publication internationale: WO 2018/096271

(56) Documents cités:
- DE-A1-102013 018 404
- DE-A1-102014 226 755
- JP-A- S5 869 404
- US-A- 5 523 666
- US-A1- 2005 166 352

## Description

La présente demande de brevet revendique la priorité de la demande de brevet français FR16/61564.

### Domaine

La présente description concerne de façon générale un système de raccordement électrique et, plus particulièrement, un système de recharge électrique pour véhicules automobiles.

Dans son application à la recharge électrique de véhicules automobiles, la présente description concerne plus particulièrement l'interface de raccordement entre un chargeur de batterie côté véhicule, et une station de recharge.

### Exposé de l'art antérieur

La recharge de la ou des batteries d'un véhicule automobile, par exemple un véhicule de tourisme, s'effectue généralement en raccordant un chargeur de batterie contenu dans le véhicule à une source d'énergie électrique, par exemple un réseau de distribution d'électricité ou une installation photovoltaïque. Pour cela, un câble relie le chargeur à une station de recharge alimentée en électricité. Le câble est équipé d'une fiche de raccordement à une prise côté installation de fourniture de l'énergie électrique et/ou côté véhicule. La tension utilisée pour la recharge (la tension du réseau de distribution d'électricité) requiert de disposer d'une connexion garantissant la sécurité de l'utilisateur contre tout risque d'électrocution.

Selon un autre exemple d'application, dans les systèmes urbains de transport en commun à bus à propulsion électrique (tramways ou trolleybus), on utilise des systèmes à pantographes ou à perches pour capter le courant de lignes aériennes de contact de type caténaires déployées le long du trajet du bus. Avec l'arrivée de batterie de forte capacité permettant de stocker une quantité d'énergie suffisante, ces systèmes ont tendances à être remplacés par des bus électriques autonomes, ne nécessitant pas d'infrastructure de fourniture d'électricité tout le long du trajet. Cela élargie considérablement le champ d'utilisation possible des bus électriques. Un bus électrique de ce type est rechargé ponctuellement à partir d'une station de recharge raccordée à un réseau de fourniture d'électricité.

La puissance requise pour un bus électrique ou un poids-lourd nécessite des moteurs à courant alternatif sous des tensions de plusieurs centaines de volts (typiquement de l'ordre de 700-800 volts). Il en découle un besoin de stations de recharge de fortes puissances (de l'ordre de quelques centaines de kW), en particulier pour des recharges rapides (au moins quelques dizaines de minutes). Les solutions basées sur l'utilisation de câbles de raccordement du bus à la station de recharge ne sont pas adaptées car elles engendrent des contraintes en termes de sécurité et en termes de manipulation du câble.

Il existe un besoin d'amélioration des systèmes de raccordement de véhicules à des stations de recharge.

Plus généralement, il existe un besoin d'un système de raccordement électrique sécurisé d'un objet électrique à une source d'énergie.

Le document DE102013018404 décrit un système de sécurité pour véhicule avec un système électrique haute tension. Ce document dévoile une station de charge pour véhicule, comportant une structure rigide dont une surface accessible est, au moins en partie, électriquement conductrice, la surface accessible constituant au moins un premier et un deuxième contacts électriques, reliés à un circuit de fourniture d'une tension de charge, ayant chacun une surface accessible au moins en partie électriquement conductrice; au moins un premier interrupteur mécanique actionnable par un véhicule par l'intermédiaire d'un élément mobile, ledit interrupteur mécanique étant mobiles entre au moins une première position de repos où leurs parties conductrices sont court-circuitées à la terre, et une deuxième position où lorsque le véhicule actionne l'élément mobile, cela provoque l'ouverture du ou des premiers interrupteurs et supprime le court-circuit à la terre.

Le document US2005/166352 décrit un système de traitement de sol.

Le document US5523666 décrit un dispositif de chargement de batterie pour véhicule électrique.

Le document DE102014226755 décrit un dispositif et procédé pour raccordement électrique d'une station de charge avec une prise de recharge d'un véhicule.

Le document JPS5869404 décrit un système de recharge par couplage automatique pour véhicule à moteur électrique. Résumé

Un mode de réalisation vise à pallier tout ou partie de inconvénients des interfaces actuelles de raccordement électrique, notamment pour véhicules électriques ou hybrides.

L'invention propose une station de charge conforme à la revendication 1. D'autres modes de réalisation sont prévus par les revendications dépendantes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, l'architecture d'un système de recharge d'un véhicule électrique ;
la figure 2 représente, de façon très schématique et fonctionnelle, un mode de réalisation d'un système de raccordement électrique d'un objet mobile à un équipement de fourniture d'énergie électrique ;
la figure 3 est une vue en perspective d'un mode de réalisation d'une station de recharge pour véhicule automobile ;
la figure 4 est une vue en perspective d'un véhicule électrique équipé d'un mode de réalisation de dispositifs de raccordement électrique ;
la figure 5 est une vue en perspective d'un véhicule en cours de charge dans une station de la figure 3 ;
les figures 6A, 6B et 6C illustrent le fonctionnement de l'interface de raccordement électrique d'un véhicule à une station de charge ;
la figure 7 représente un schéma électrique simplifié d'un mode de réalisation d'un système de raccordement électrique ;
les figures 8A et 8B illustrent une variante de réalisation d'un véhicule raccordé à une station de recharge ;
la figure 9 représente un autre mode de réalisation d'une interface de raccordement, appliqué à une moto ;
les figures 10A, 10B et 10C représentent, de façon très schématique, un mode de réalisation d'un système de recharge par contact aérien ;
les figures 11A, 11B, 11B', 11B" et 11C représentent des schémas électriques équivalents d'une interface de raccordement du système des figures 10A à 10C, à différents stades illustrant son fonctionnement ; et
les figures 12A, 12B et 12C représentent un autre mode de réalisation d'une interface de raccordement.

### Description détaillée

La description fait référence à un exemple d'application à des systèmes de raccordement de véhicules électriques à des stations de recharge. Les solutions décrites s'appliquent toutefois plus généralement à tout raccordement électrique d'un objet à un autre, un des objets étant mobile par rapport à l'autre, que ce soit à des fins de recharge de batterie, d'alimentation électrique, etc.

De mêmes éléments ont été désignés par de mêmes références aux différentes figures. Par souci de clarté, seuls les éléments qui sont utiles à la compréhension des modes de réalisation décrits ont été représentés et seront détaillés. En particulier, la gestion de la recharge d'une batterie de véhicule n'a pas été détaillée, les modes de réalisation décrits étant compatibles avec les solutions usuelles.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un système de raccordement dans une position normale d'utilisation.

Sauf précision contraire, les expressions "approximativement", "sensiblement", et "de l'ordre de" signifient à 10 % près ou 10° près, de préférence à 5 % ou 5° près.

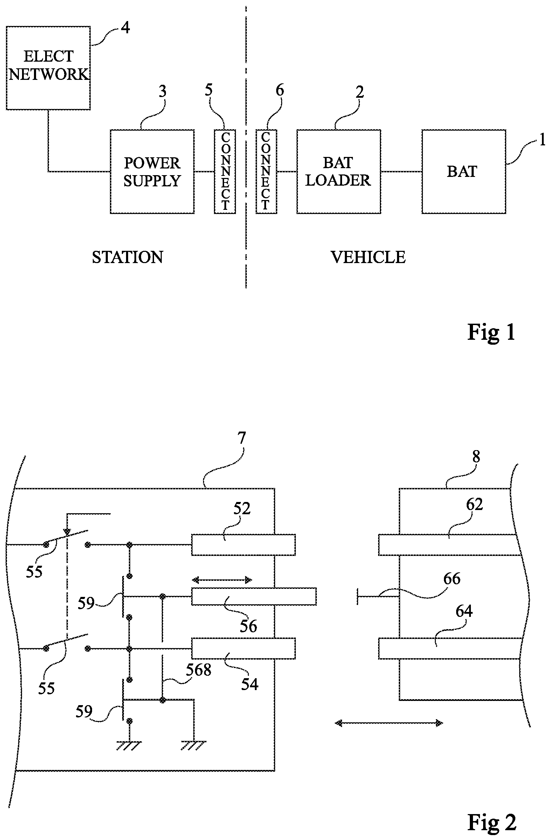

La figure 1 représente, de façon très schématique et sous forme de blocs, l'architecture d'un système de recharge d'un véhicule électrique.

Un véhicule électrique ou hybride (VEHICLE) comporte une ou plusieurs batteries 1 (BAT) destinées à fournir l'énergie nécessaire à sa propulsion. Ces batteries 1 sont reliées à un ou plusieurs dispositifs 2 (BAT LOADER) de gestion de charge et de commande, ou chargeurs, destinés à contrôler la charge des batteries lorsqu'elles sont raccordées à une installation de fourniture d'électricité. L'installation de fourniture d'électricité comporte une station (STATION) de recharge qui peut être une station de recharge publique de type station-service, une station domestique (par exemple au domicile de l'utilisateur du véhicule), etc. La station comporte un dispositif 3 (POWER SUPPLY) de commande et de fourniture d'électricité, raccordé à un réseau 4 (ELECT NETWORK) de fourniture d'électricité, par exemple, le réseau de distribution électrique ou une installation solaire de fourniture d'électricité.

Le raccordement du chargeur 2 au dispositif de charge 3 s'effectue par une interface de raccordement comportant au moins un dispositif de raccordement 5 (CONNECT) côté station ou faisant partie de la station et un dispositif de raccordement 6 (CONNECT) côté véhicule ou faisant partie du véhicule.

Dans les systèmes classiques, l'interface de raccordement est un câble électrique raccordant une prise ou fiche côté station à une fiche ou prise côté véhicule.

L'utilisation de câbles pose de multiples problèmes parmi lesquels :
- un encombrement important fonction de la longueur du câble ;
- un besoin d'espace côté station ou côté véhicule pour ranger le câble entre deux utilisations ;
- un risque de sécurité électrique en cas de câble endommagé ;
- une contrainte de manipulation du câble, notamment pour des fortes puissances en raison de la masse du câble ;
- un coût élevé, notamment en raison de la masse de cuivre requis.

La figure 2 représente, de façon très schématique et fonctionnelle, un mode de réalisation d'un système de raccordement électrique d'un objet mobile 8 (par exemple, un véhicule) à un équipement 7 (par exemple, une station de recharge) de fourniture d'énergie électrique. L'objet 8 et l'équipement 7 ne sont représentés que partiellement.

Dans l'exemple représenté, l'équipement 7 comporte un ou plusieurs interrupteurs mécaniques 59 actionnables par l'objet mobile 8. Par exemple, un élément 56, d'actionnement mécanique des interrupteurs 59, est actionnable par un doigt 66 saillant de la surface de l'objet mobile et solidaire mécaniquement de celui-ci (ou comme on le verra par la suite d'un contact électrique de l'objet mobile). Le rôle de ces interrupteurs 59 est, lorsqu'ils sont au repos, de court-circuiter à la terre des contacts ou connecteurs électriques de l'équipement 7, ces contacts 52 et 54 ayant chacun une surface accessible de l'extérieur de l'équipement au moins en partie électriquement conductrice. Lorsque l'objet mobile 8 actionne l'élément mobile 56, cela provoque l'ouverture du ou des interrupteurs 59 et supprime le court-circuit à la terre.

De préférence, le doigt ou élément 66 est électriquement conducteur, de même que l'élément 56. De plus, dans l'exemple représenté, l'élément 56 est relié à la terre (liaison 568), indépendamment de sa position. Ainsi, lorsque les éléments 66 et 56 entrent en contacts, l'objet 8 (les parties de celui-ci ayant besoin de l'être par sécurité) se trouve raccordé à la terre.

Côté objet mobile 8, celui-ci possède également des contacts ou connecteurs 62 et 64 destinés à entrer en contact avec les contacts 52 et 54 pour alimenter électriquement l'objet mobile 8.

Par ailleurs, les contacts 52 et 54 de l'équipement 7 sont respectivement reliés à une première borne d'interrupteurs 55 dont une autre borne est mise sous tension (en permanence ou sous commande) pour la fourniture d'énergie électrique. Au repos, les interrupteurs 55 sont ouverts, c'est-à-dire que les contacts 52 et 54 ne sont pas alimentés. La fermeture des interrupteurs 55 n'intervient que lorsque les surfaces accessibles des contacts 52 et 54 ne risquent pas d'être touchées par un utilisateur. En pratique, les formes de l'équipement 7 et de l'objet mobile 8, et les positions respectives de leurs contacts 52 et 62, 54 et 64 ainsi que 56 et 66, sont telles que lorsqu'une connexion est assurée entre les contacts 52 et 62, 54 et 64, ils sont inaccessibles au toucher d'un utilisateur.

De préférence, l'élément mobile 56 actionne mécaniquement et directement le ou les interrupteurs 59 sans passer par des éléments électriques ou électroniques. Cela garantie un fonctionnement plus fiable.

Selon un mode de réalisation préféré, les contacts 52 et 54 sont eux-mêmes mobiles et actionnent mécaniquement leurs interrupteurs 55 respectifs. Les interrupteurs 55 sont donc également actionnés par l'objet mobile 8.

Une structure de connexion similaire est de préférence prévue côté objet mobile 8, c'est-à-dire que les contacts 62 et 64 sont court-circuités au moins entre eux et préférentiellement à la masse électrique de l'objet 8 quand ce dernier n'est pas raccordé à l'équipement 7.

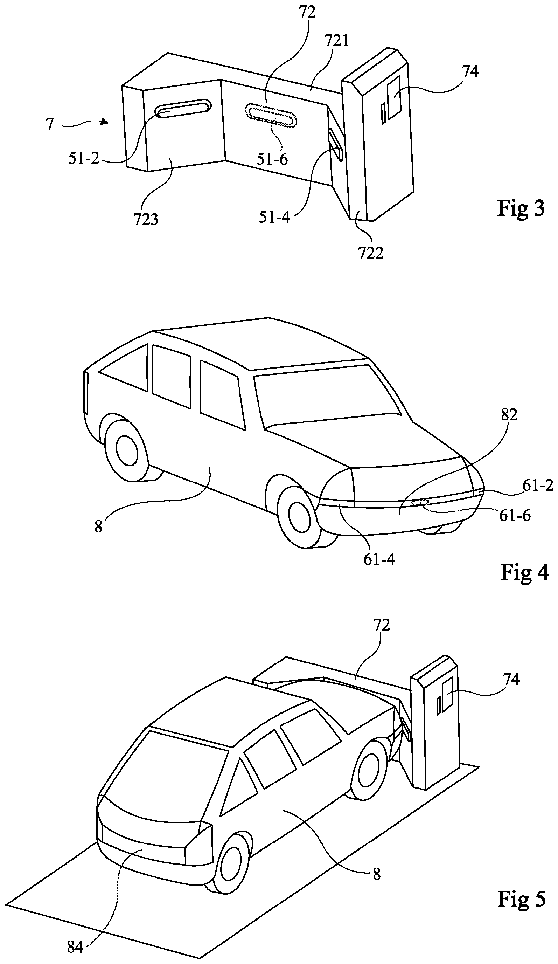

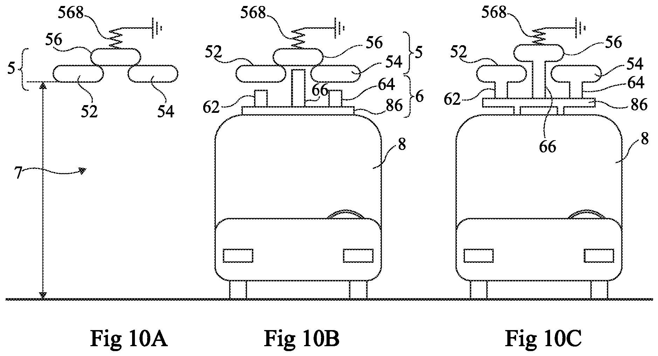

D'autres caractéristiques du système de raccordement vont être décrites par la suite en relation avec deux exemples particuliers de réalisation respectivement appliqués à une station de recharge au sol d'un véhicule électrique (figures 3 à 9) et à un système de recharge par captation aérienne (figures 10 à 12). Sauf précision contraire, ces caractéristiques s'appliquent à tout raccordement électrique d'un objet à un autre et en particulier au système générique de la figure 2.

La figure 3 est une vue en perspective d'un mode de réalisation d'une station 7 de recharge (équipement de fourniture d'énergie électrique), équipée d'un mode de réalisation d'un dispositif de raccordement 5 pour la fourniture d'électricité.

La figure 4 est une vue en perspective d'un véhicule électrique 8 (objet mobile à alimentation électrique), équipé d'un mode de réalisation d'un dispositif 6 de raccordement électrique.

La figure 5 est une vue en perspective du véhicule 8 de la figure 3 en cours de charge dans la station 7 de la figure 3.

La station 7 (figure 3) comporte une structure rigide 72 portant trois tampons 51-2, 51-4 et 51-6 faisant partie d'un dispositif de raccordement 5 et, de préférence, un dispositif 74 de commande de type IHM (Interface Homme-Machine) contrôlant la fourniture d'électricité au dispositif de raccordement. Selon le type de raccordement électrique requis entre la station 7 et le véhicule 8, la station 7 peut ne comporter que deux tampons ou plus de trois tampons. Les tampons 51-2 et 51-4 ont chacun une surface conductrice correspondant à la surface conductrice des contacts, respectivement 52 et 54 (figure 2). De préférence, le tampon 51-6 correspondant à l'élément 56 est également conducteur et est en permanence raccordé à la terre.

Côté véhicule 8 (figure 4), celui-ci comporte également au moins deux tampons 61-2 et 61-4 faisant partie d'un dispositif de raccordement (6, figure 1) et, dans l'exemple représenté, un troisième tampon 61-6 correspondant à l'élément 66 (figure 2).

Les positions respectives des tampons côté station 7 et côté véhicule 8 sont telles qu'au moins deux tampons du véhicule puissent entrer en contact avec un nombre équivalent de tampons de la station. De préférence, les tampons 61-2, 61-4 et 61-6 sont disposés au niveau du pare-chocs avant 82 et/ou arrière 84 du véhicule 8.

Pour procéder à une recharge, le véhicule 8 se présente face à la station et avance (dans le cas de tampons portés par le pare-chocs avant) jusqu'à ce que chaque tampon 61 appuie sur un tampon 51.

De préférence, la structure 72 de la station 7 à une forme telle que ses parois frontale 721 et latérales 722 et 723 bloquent l'accès aux tampons 51, au moins aux tampons 51-2 et 51-4, lorsque le véhicule 8 est en position de charge comme cela est illustré en figure 4. Ces parois forment en quelque sorte une coque autour de l'avant du véhicule 8. Le véhicule lui-même protège l'accès aux tampons une fois qu'il est en place. Par exemple, les parois latérales 722 et 723 portant les tampons 51-2 et 51-4 font un angle compris entre approximativement 30 et 60 degrés avec la paroi frontale 721 définissant le fond de la station 7. Selon un mode de réalisation particulier, la hauteur des parois 721, 722 et 723 est d'au moins 1 mètre afin d'empêcher à un utilisateur de glisser son bras et d'atteindre un tampon sous tension. Plus généralement, leurs formes et dimensions sont choisies pour qu'une fois un véhicule en place, il ne soit pas possible d'accéder aux tampons, c'est-à-dire de les toucher, à l'exception le cas échéant des tampons 51-6 et 61-6 qui sont à la terre.

L'alimentation électrique du chargeur 2 (figure 1) depuis le dispositif 3 de fourniture d'électricité passe par les tampons 51-2, 51-4 et 61-2, 61-4. La surface accessible des tampons 51-2, 51-4 et 61-2, 61-4 est au moins en partie conductrice. Dans l'exemple représenté, cette partie conductrice n'est susceptible de fournir de l'énergie que lorsque les tampons 61-2 et 61-4 sont respectivement en appui sur les tampons 51-2 et 51-4. De préférence, toute la surface accessible des tampons est conductrice, voire l'intégralité des tampons est en matériau conducteur. Cela facilite la réalisation et le positionnement du véhicule pour la recharge.

On voit déjà apparaître de multiples avantages à un tel système, parmi lesquels :
- l'absence de câble et les problèmes associés (encombrement, besoin d'un espace de rangement, manipulation, etc.) ;
- une simplicité d'utilisation ;
- une sécurité électrique accrue par l'absence de câble et d'accès possible à l'interface de raccordement lorsque le véhicule est en charge ;
- une sécurité électrique accrue par la mise à la terre des contacts 51-2 et 51-4 en l'absence de véhicule en position de charge. Cette sécurité étant indépendante d'un dysfonctionnement éventuel des circuits de commande grâce au fait qu'elle est commandée mécaniquement.

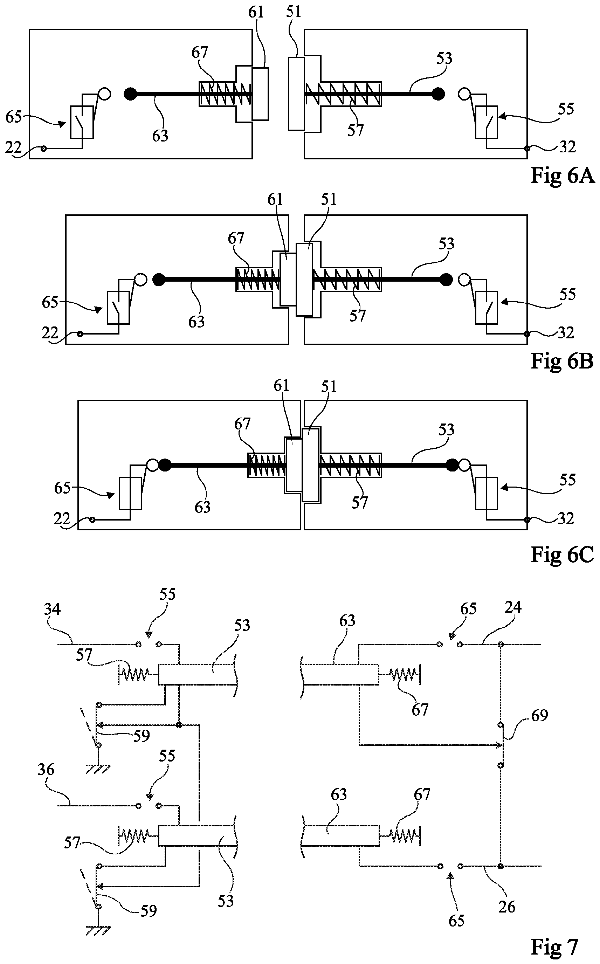

Les figures 6A, 6B et 6C illustrent le fonctionnement d'un exemple de réalisation de l'interface de raccordement électrique d'un véhicule à une station de charge. Ces figures représentent schématiquement l'interface de raccordement électrique respectivement au repos, en phase d'approche du véhicule et en charge. Les représentations des figures 6A à 6C ne reproduisent que la mise sous tension d'un tampon et ne représentent pas le court-circuit à la terre. Pour simplifier, on utilise une référence commune 61 pour un tampon côté véhicule et 51 pour un tampon côté station.

Selon ce mode de réalisation, chaque tampon 51, 61 est monté mobile en translation selon une direction perpendiculaire à sa surface. Dans l'exemple représenté, chaque tampon 51, 61 est porté par une tige 53, 63 dont l'extrémité, distale du tampon, actionne un interrupteur mécanique 55, 65 de mise sous tension. Par exemple, la tige 53, respectivement 63, ferme l'interrupteur 55, respectivement 65, créant une continuité électrique entre une borne 32 du dispositif 3, respectivement 22 du chargeur 2, et le tampon 51, respectivement 61. Chaque tampon 51, 61 est rappelé par un ressort 57, respectivement 67, vers une position de repos où le tampon est sorti et où l'interrupteur 55, respectivement 65, est ouvert. La résistance des ressorts 57 et 67 est choisie pour qu'ils ne puissent pas être comprimés à la main afin d'éviter tout risque de raccordement accidentel en l'absence du véhicule.

De préférence, les tampons 51 et 61, lorsqu'ils sont au repos, dépassent respectivement de la paroi de la station et du pare-chocs. Cela facilite le positionnement et l'actionnement. En variante, les tampons 51 sont en retrait de la surface de la paroi 721, 723 de la station 7, ou les tampons 61 sont en retrait du pare-chocs.

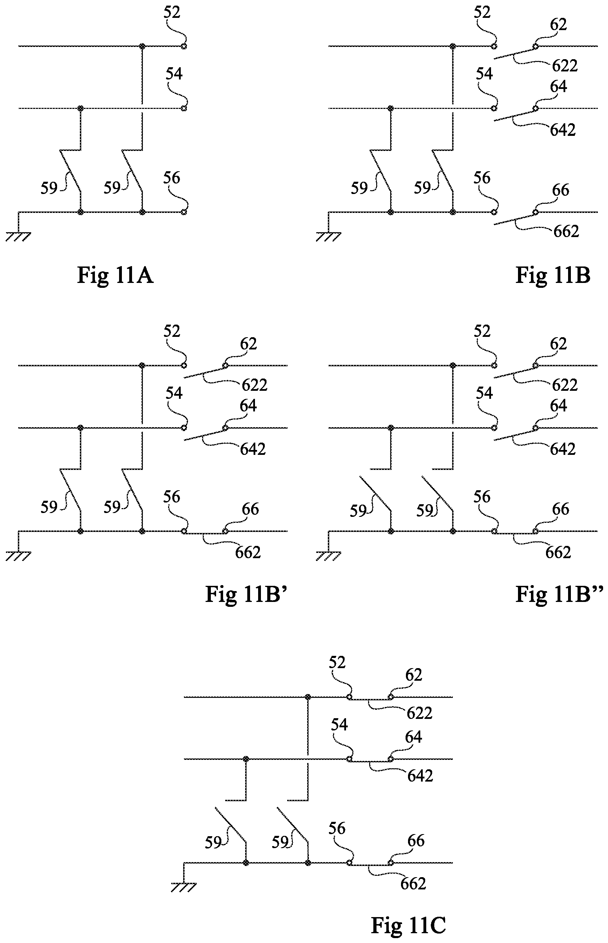

La figure 6A illustre la position de repos où les tampons 51 et 61 ne sont pas en contact. La figure 6B illustre une position intermédiaire dans laquelle le tampon 61 commence à pousser sur le tampon 51. Cette position correspond à la position dans laquelle se produit la mise à la terre du véhicule par les contacts 56 et 66 (figure 2) et l'ouverture du court-circuit (interrupteurs 59, figure 2) entre les contacts d'alimentation. La figure 6C illustre une position de raccordement dans laquelle les tiges 53 et 63 actionnent les interrupteurs 55 et 65. Pour plus de détails sur les connexions électriques, on pourra se reporter au fonctionnement décrit plus loin en relation avec les figures 11A à 11C.

Dans l'exemple représenté aux figures 6A à 6C, la tige 53, respectivement 63, est conductrice et assure elle-même le raccordement électrique du tampon 51, respectivement 61, à l'interrupteur 55, respectivement 65. En d'autres termes, l'actionneur mécanique de l'interrupteur 55, respectivement 65, est relié électriquement à la première borne de conduction de cet interrupteur.

Selon un autre mode de réalisation, la première borne de conduction de l'interrupteur 55, respectivement 65, est connectée électriquement, par exemple par un fil (non représenté), à la partie conductrice de la surface accessible du tampon.

Une fois la position de la figure 6C atteinte, le véhicule peut en principe commencer à être chargé. De préférence, le dispositif 74 (figure 3 ou 5) de commande commence à effectuer des tests de continuité électrique et de sécurité avant de mettre sous tension les bornes 32 associées aux différents tampons.

De préférence, le tampon 61 est plus petit que le tampon 51, ce qui autorise des écarts de positionnement du véhicule tout en garantissant une recharge correcte.

Selon une variante de réalisation, les tampons 61, côté véhicule 8, sont fixes et seuls les tampons 51, côté station 7, sont mobiles. Dans ce cas, le chargeur de batterie (2, figure 1) doit être en mesure de déconnecter les bornes de la batterie du dispositif de raccordement afin d'éviter tout problème électrique entre les recharges.

Comme indiqué plus haut, au moins un des tampons 51 (le tampon 51-6) assure un raccordement à la terre du véhicule avant toute alimentation électrique. Lors de l'approche du véhicule 8, le premier contact à être actionné par le véhicule 8 est un contact de mise à la terre de la carrosserie du véhicule, c'est-à-dire d'une connexion entre la carrosserie du véhicule et une borne de terre côté station. Un tel raccordement ordonné (d'abord la terre, puis les bornes d'alimentation) peut être obtenu, soit par des résistances différentes des ressorts 57 affectés aux différents tampons 51, soit par des longueurs de tiges 53 différentes.

Côté véhicule, le tampon prenant appui sur le tampon de la station raccordé à la terre, est connecté à la carrosserie du véhicule.

Selon un autre mode de réalisation, on prévoit également côté véhicule une mise en court-circuit au repos des conducteurs du chargeur 2, avec une mise à la masse éventuelle de ceux-ci.

La figure 7 représente un schéma électrique simplifié d'un mode de réalisation mettant en oeuvre, au repos, également un court-circuit des conducteurs, côté station et côté véhicule.

Côté station, selon cet exemple, on suppose qu'un des tampons 51 actionne, par sa tige 53, à la fois l'ouverture des interrupteurs 59 et la fermeture d'un interrupteur 55. Plus précisément, les interrupteurs 59 permettent de connecter, au repos, les tiges 53 et par suite les tampons 51 à la terre, et l'actionnement de cette tige 53 permet d'ouvrir les interrupteurs 59 et de supprimer le court-circuit à la masse. En outre, les interrupteurs 55 sont reliés d'une part à des conducteurs d'alimentation 34 et 36 (par exemple de phase et de neutre d'une alimentation alternative ou positif et négatif d'une alimentation continue) et d'autre part respectivement aux tiges 53 reliées électriquement aux tampons 51. L'actionnement d'une tige 53 entraîne la fermeture de l'interrupteur 55 associé et permet la mise sous tension du tampon 51 associé en le reliant à un de ces conducteurs (par exemple 34). La course mécanique de la tige 53 est, de préférence, conçue pour que les interrupteurs 59 soient ouvert avant que les interrupteurs 55 soient fermés.

En variante, des interrupteurs additionnels sont prévus en amont sur les conducteurs 34 et 36 pour interrompre l'alimentation électrique, côté station, en amont du dispositif de raccordement.

Côté véhicule, deux conducteurs 24 et 26, correspondant aux conducteurs 34 et 36 de la station sont reliés respectivement aux contacts 62, 64 (figure 2) correspondant par une tige 63 et des interrupteurs 65 sont intercalés entre les contacts 62, 64 et les conducteurs 24, 26. Les conducteurs 24 et 26 sont ainsi reliés à une batterie BAT via le dispositif de gestion de charge (BAT LOADER). Comme pour la station, au repos, les tiges 63, et par suite, les tampons 61 et les contacts 62, 64 sont mis en court-circuit par un interrupteur 69. L'interrupteur 69 est, par exemple, actionné par l'une des tiges 63 des tampons 61. Comme pour l'ouverture des interrupteurs 59, la course mécanique d'une tige 63 est conçue pour que l'interrupteur 69 soit ouvert avant que les interrupteurs 65 soient fermés. En variante, de manière analogue à la mise à la terre côté station, deux interrupteurs 69 peuvent être utilisés pour assurer le court-circuit et la mise à la masse des conducteurs 24 et 26 du véhicule.

Dans une réalisation où l'ouverture des interrupteurs 59 et 69 et la connexion du véhicule à la terre de la station est effectuée par un tampon supplémentaire 51-6 (figure 3), 61-6 (figure 4), côté station et côté véhicule, la connexion à la terre du véhicule s'effectue avant la mise sous tension des autres tampons. Dans ce cas, on utilise trois tampons pour une alimentation en continu (deux pour l'application de la tension continue et un pour la terre) ou pour une alimentation alternative monophasée (un pour la phase, un pour le neutre et un pour la terre), quatre tampons pour une alimentation alternative triphasée sans neutre (un par phase et un pour la terre).

Selon une autre variante, l'actionnement mécanique ne concerne que la mise à la terre du véhicule et l'ouverture des interrupteur 59 et 69, apportant la sécurité électrique, la fermeture des interrupteurs 55 et 65 étant déclenchée électroniquement une fois le véhicule raccordé à la terre.

Dans le cas d'une alimentation alternative monophasée dont le neutre est connecté à la terre côté station 7, le court-circuit à la terre des tampons 51 et des contacts 52, 54 (fonction des interrupteurs 59) s'effectue en court-circuitant ces tampons/contacts entre eux. Dans ce cas, deux tampons suffisent.

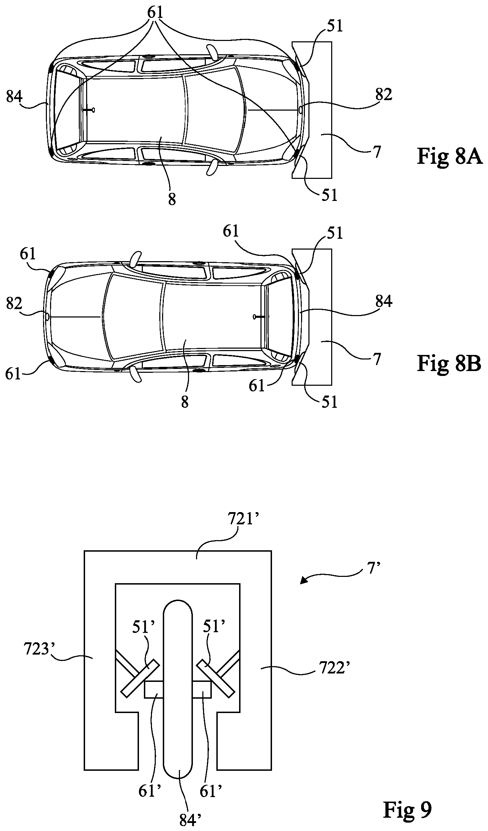

Les figures 8A et 8B illustrent une variante de réalisation d'un véhicule raccordé à une station de recharge.

Selon cette variante, le véhicule est équipé de tampons à l'arrière et à l'avant. Ainsi, le véhicule peut être rechargé par l'avant (figure 8A) ou par l'arrière (figure 8B). Dans une telle réalisation, on s'assure que la connexion électrique ne concerne que les tampons en contact avec la station. Cela peut être effectué, soit par une commande électronique, soit en exploitant le mouvement mécanique des tampons du pare choc entrant en contact avec la station pour actionner des interrupteurs appropriés garantissant une déconnexion des tampons du pare-chocs opposé. En particulier, avant d'effectuer une charge par l'avant (figure 8A), respectivement par l'arrière (figure 8B), on doit s'assurer que les tampons 61 du pare-chocs arrière 84, respectivement avant 82, sont déconnectés du système électrique, et de préférence, court-circuités entre eux et reliés à la masse du véhicule.

Les dimensions des tampons 51 et 61 sont choisies pour autoriser un raccordement électrique malgré de légères variations de position (en particulier latérale) du véhicule par rapport à la station. A titre d'exemple particulier de réalisation, la partie conductrice des tampons 51 a une longueur comprise entre environ 20 et 60 centimètres tandis que la partie conductrice des tampons 61 a une longueur comprise entre environ 5 et 20 centimètres. La hauteur des tampons est également plus importante pour les tampons 51 que pour les tampons 61 afin de faciliter le positionnement du véhicule et de tenir compte des variations de hauteur des tampons 61 d'une voiture à une autre. A titre d'exemple particulier de réalisation, la partie conductrice des tampons 51 a une hauteur comprise entre environ 10 et 40 centimètres tandis que la partie conductrice des tampons 61 a une hauteur comprise entre environ 5 et 20 centimètres.

La figure 9 représente, vu de dessus et de façon très schématique et partielle, un autre mode de réalisation d'une interface de raccordement, appliqué à une motocyclette.

Selon ce mode de réalisation, on retrouve deux tampons mobiles 51' côté station 7' et deux tampons fixes 61' au niveau de la fourche de la moto ou des faces latérales de son moyeu de roue. Pour simplifier, seule la roue 84' de la moto a été représentée. La structure rigide de la station 7' a, vu de dessus, une forme de U dont les branches 722' et 723' portent les tampons 51'. De préférence, les tampons 51' sont inclinés par rapport aux branches du U, de façon à faciliter l'introduction de la roue 84' de la moto. Le fonctionnement du système de recharge de la figure 9 est similaire à celui exposé en relation avec les figures précédentes.

Un avantage des modes de réalisation décrits est qu'ils garantissent un raccordement électrique correct, tout en assurant la sécurité des personnes, les tampons 51, 51' ne pouvant être alimentés qu'une fois qu'ils sont poussés par le véhicule. De plus, grâce à l'action mécanique, cette sécurité n'est sujette à aucun risque de dysfonctionnement électrique (par exemple, défaut en court-circuit d'un interrupteur électronique).

Un autre avantage est que, en période de charge, les contacts électriques (parties conductrices des tampons) ne sont pas accessibles. Ainsi, on garantit la sécurité de l'utilisateur. En raccordant le véhicule à la terre avant mise sous tension des tampons, on améliore encore la protection. Par ailleurs, en mettant à la terre les conducteurs d'alimentation côté station hors de périodes de charge et en court-circuitant les conducteurs côté véhicule et en les reliant à la masse du véhicule, on optimise la sécurité électrique. En effet, on peut alors toucher les tampons sans risque.

On décrira par la suite un autre exemple particulier de réalisation appliqué à un système de recharge par captation aérienne (figures 10 à 12). On prend pour exemple un bus électrique. Toutefois, tout ce qui va être décrit s'applique plus généralement à toute recharge rapide de véhicules, de préférence de forte puissance par rapport à la puissance d'un véhicule de tourisme, par exemple les poids-lourds.

Pour des recharges rapides de bus électriques, on préfère une recharge par lignes aériennes de contact, basée sur une interface de raccordement de type pantographe captant le courant de caténaires.

Pour des questions de sécurité électrique, les normes actuelles fixent une hauteur minimum (par exemple entre 5 et 8 mètres du sol) pour les lignes aériennes de contact afin d'éviter qu'une personne ou un autre véhicule puisse atteindre la caténaire en raison des risques d'électrocution. En effet, dans les systèmes classiques, la ligne aérienne de contact est en permanence alimentée. De plus, les bus ayant des pneus, ils ne sont pas en contact conducteur avec la terre.

Selon les modes de réalisation qui vont être décrits, on prévoit une station de recharge ponctuelle par contact aérien, avec un raccordement du bus à la terre avant de commencer la recharge. Par ailleurs, afin d'éviter tout risque d'électrocution au niveau de la station en l'absence de recharge. On prévoit de court-circuiter les contacts aériens de la station à la terre. Pendant la phase de court-circuit des contacts aériens de la station à la terre, la fourniture d'énergie électrique à ces contacts est interrompue, soit par l'ouverture d'interrupteurs mécaniques, par exemple comme exposé dans les précédents modes de réalisation, soit par ouverture d'interrupteurs électroniques, soit en commandant l'arrêt de la fourniture de courant dans le cas d'utilisation d'un chargeur de tension continue.

Les figures 10A, 10B et 10C représentent, de façon très schématique, un mode de réalisation d'un système de recharge par contact aérien, respectivement, en l'absence de bus au niveau de la station, en présence d'un bus positionné en vue d'une recharge, et pendant la recharge.

Les figures 11A, 11B, 11B', 11B" et 11C représentent des schémas électriques équivalents de l'interface de raccordement du système des figures 10A à 10C, à différents stades illustrant son fonctionnement.

Dans ces modes de réalisation, on suppose une recharge alternative monophasée ou continue, c'est-à-dire requérant deux conducteurs de fourniture du courant. Toutefois, la description ci-dessous se transpose sans difficulté à une recharge alternative polyphasée.

Le dispositif de raccordement 5 côté station de recharge 7 (figure 10A) comporte deux contacts aériens 52 et 54 de fourniture du courant et un contact aérien 56 de terre. Le contact 56 est en permanence raccordé à la terre. Dans l'exemple représenté, le contact de terre 56 est disposé entre les deux contacts 52 et 54. Par ailleurs, en position de repos telle que représentée en figure 10A, le contact de terre 56 court-circuite les deux contacts 52 et 54 qui sont donc raccordés à la terre. On évite ainsi tout risque d'électrocution lorsque la station est à vide. Par exemple, le contact de terre 56 est associé à un ressort 586 le rappelant vers une position où il contacte les deux contacts 52 et 54.

Les contacts aériens 52, 54 et 56 peuvent prendre différentes formes pourvus qu'ils soient ponctuels, c'est-à-dire que leur longueur (dans la direction longitudinale d'un bus en cours de recharge) soit, non seulement inférieure à la longueur du bus mais également telle qu'ils ne dépassent pas du bus lorsque le pantographe de ce dernier est en contact. Par ailleurs, les contacts ne doivent pas être accessibles latéralement par rapport au bus. De préférence, les dispositifs de connexion, côté bus et côté station, sont des tampons conducteurs, par exemple d'une surface de quelques centimètres carrés à quelques dizaines de centimètres carrés côté bus et d'une dizaine à quelques centaines de centimètres carrés côté station.

La figure 11A illustre le schéma électrique équivalent de la station dans la configuration de la figure 10A. Le contact 56 revient à deux interrupteurs 59 raccordant les conducteurs 52 et 54 à la terre, ces interrupteurs ayant une position fermée au repos.

Lorsqu'un bus 8 se présente à la station pour une recharge (figure 10B), son dispositif de raccordement 6 est placé sous le dispositif de raccordement 5 de la station. Par exemple, dans le cas d'un pantographe 86, ce dernier porte trois contacts ou tampons 62, 64 et 66, de préférence de surface inférieure à celle des contacts ou tampons 52, 54 et 56 afin de faciliter le positionnement des contacts les uns par rapport aux autres. Les positions respectives en hauteur des contacts 62, 64, et 66 sont telles que le contact 66 destiné à coopérer avec le contact de terre 56 de la station connecte celui-ci en premier (avant que les contacts 62 et 64 ne connectent les contacts 52 et 54) lors d'une mise en charge.

La figure 11B illustre le schéma électrique équivalent de la station dans la configuration de la figure 10B. Les contacts 62, 64 et 66 et les contacts 52, 54 et 56 définissent deux à deux trois interrupteurs virtuels 622, 642 et 662 ouverts au repos.

Lorsque les contacts 62, 64 et 66 sont relevés simultanément par l'actionnement du pantographe 86, le tampon 66 commence par contacter le contact 56, ce qui provoque la mise à la terre du bus par la fermeture de l'interrupteur 662 (figure 11B'). Puis, lorsque le pantographe 86 continue à monter, le contact 66 pousse à l'encontre de la force de rappel du ressort 568 de façon à relever le tampon 56 et supprimer le court-circuit à la terre des contacts 52 et 56. Cela revient à ouvrir les interrupteurs 59 (figure 11B").

Enfin, lorsque le pantographe 86 est dans sa position complètement montée (figure 10C), les tampons 62 et 64 connectent les contacts 52 et 54. Cela revient à fermer les interrupteurs 622 et 642 (figure 11C).

Le bus peut alors être rechargé. La recharge elle-même n'est pas modifiée par la mise en oeuvre des modes de réalisation décrit. Les contacts 52 et 54 ne sont mis sous tension qu'une fois la position de la figure 10C atteinte. Différent solution peuvent être prévues pour cette mise sous tension. Par exemple, des interrupteurs sont prévus en amont des contacts 52 et 54 pour commander cette mise sont tension. La commande de ces interrupteurs provient d'un dispositif de commande détectant par exemple que les contacts 52 et 54 ne sont plus à la terre et/ou que ces contacts sont connectés aux contacts 62 et 64, etc., et provoquant automatiquement la mise sous tension ou autorisant une commande manuelle de mise sous tension autrement bloquée.

Une fois la recharge terminée, les contacts 52 et 54 sont mis hors tension et le pantographe 86 est rabaissé, ce qui revient électriquement à ouvrir les interrupteurs 622 et 642, puis à fermer les interrupteurs 59 et enfin à ouvrir l'interrupteur 662.

On notera qu'au cas où le pantographe 86 est abaissé avant que l'alimentation des conducteurs 52 et 54 ne soit coupée, l'ouverture de la connexion des contacts 52 et 54 aux contacts 62 et 64 est détectée (en utilisant les mêmes dispositifs que pour la détection à la mise sous tension) de façon à couper l'alimentation électrique avant la mise à la terre des contacts 52 et 54. Par la suite, la mise en court-circuit à la terre des contacts 52 et 54 par le contact 56 sécurise l'installation.

La réalisation pratique de l'installation décrite ci-dessus peut prendre diverses formes, par exemple des tampons individuels côté bus, de préférence actionnés simultanément. Bien que le fait de prévoir les éléments mobiles côté bus constituent un mode de réalisation préféré, on pourrait en variante prévoir que les contacts du bus soient fixes et que ce soit le dispositif de raccordement de la station qui s'abaisse, pourvu de respecter une mise à la terre du bus avant d'ouvrir le court-circuit à la terre côté station, c'est-à-dire que l'ensemble du dispositif 5 se déplace vers le toit du bus.

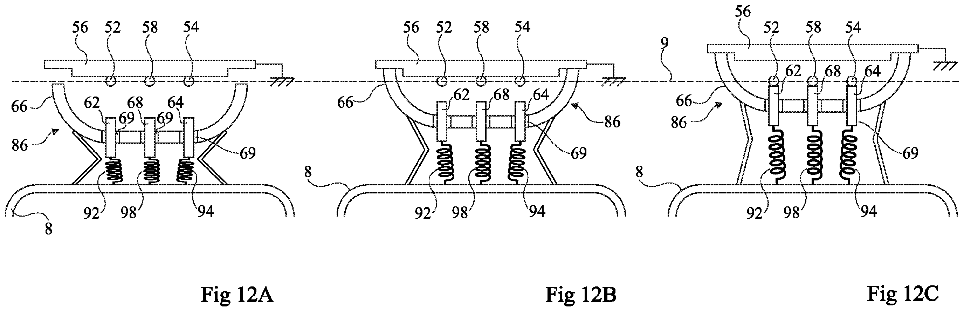

Les figures 12A, 12B et 12C représentent un autre mode de réalisation d'une interface de raccordement, basé sur un pantographe 86 dont la structure constitue le contact 66 à la terre.

Le mode de réalisation des figures 12A à 12C illustre également une variante d'alimentation en triphasé, le dispositif de raccordement de la station ayant trois contacts 52, 58 et 54 d'alimentation en plus du contact de terre 56. Côté pantographe 86, les contacts 62, 68 et 64 de puissance sont portés par la structure du pantographe et sont reliés, par exemple par des câbles 92, 98 et 94 au circuit 2 (figure 1) de contrôle de charge de la batterie. Comme la structure du pantographe est conductrice pour la mise à la terre, les contacts 62, 68 et 64 sont isolés électriquement de la structure du pantographe par des isolateurs 69. La ligne en pointillés 9 des figures 12A à 12C illustre le niveau (l'altitude) fixe des conducteurs 52, 58 et 54.

La figure 12A représente le pantographe 86 dans une position baissée. Le contact 56 court-circuite les contacts d'alimentation 52, 58 et 54. Cela correspond à la position de la figure 11A ou 11B.

La figure 12B représente le pantographe 86 dans une position intermédiaire où il entre en contact avec le contact de terre 56 de la station et raccorde donc le bus à la terre. Cela correspond à la position de la figure 11B'.

La figure 12C représente le pantographe 86 dans une position relevé où il ouvre le court-circuit des conducteurs de la station à la terre et où les contacts du dispositif de raccordement côté bus contactent les contacts d'alimentation de la station. Cela correspond à la position de la figure 11C.

Un avantage des modes de réalisation décrits est qu'ils proposent une interface de raccordement qui évite l'utilisation d'un câble de raccordement tout en permettant une mise à la terre de la carrosserie et autre partie métallique.

Un autre avantage est que, grâce à un court-circuit à la terre des contacts d'alimentation lorsque la station est à vide, et à l'utilisation de contacts ponctuels, on peut désormais prévoir de disposer ces contacts moins haut que les caténaires classiques.

Un autre avantage est que le fonctionnement est simple et ne demande aucune opération manuelle.

Dans le cas d'une recharge en triphasé, on peut prévoir d'utiliser l'onduleur du moteur du bus en redresseur pour recharger la batterie.

Divers modes de réalisation ont été décrits. Diverses variantes et modifications apparaîtront à l'homme de l'art. En particulier, le système décrit peut s'appliquer à tout véhicule. Par ailleurs, le système de raccordement décrit est compatible avec toute méthode de charge. Enfin, la mise en oeuvre pratique des modes de réalisation qui ont été décrits est à la portée de l'homme de métier à partir des indications fonctionnelles données ci-dessus.

## Revendications

1. Station de charge (7) pour véhicule, comportant :
une structure rigide (72) portant au moins deux tampons (51 2, 51 4 ; 51') dont une surface accessible est, au moins en partie, électriquement conductrice, la surface accessible de chaque tampon constituant au moins un premier (52) et un deuxième (54) contacts électriques, reliés à un circuit (3) de fourniture d'une tension de charge, ayant chacun une surface accessible au moins en partie électriquement conductrice ;
au moins un premier interrupteur mécanique (59) actionnable par un véhicule (8) par l'intermédiaire d'un élément mobile (56),
au moins un deuxième interrupteur (55) et un troisième interrupteur (55) de mise sous tension desdits premier (52) et deuxième (54) contacts, actionnables mécaniquement par ces premier (52) et deuxième (54) contacts qui sont mobiles et actionnable par ledit véhicule,
chaque tampon étant porté par une tige (53) dont l'extrémité, distale du tampon, actionne un desdits deuxième et troisième interrupteurs (55)
lesdits tampons étant mobiles entre au moins une première position de repos où leurs parties conductrices sont court-circuitées à la terre, et une deuxième position où lorsque le véhicule (8) actionne l'élément mobile (56), cela provoque l'ouverture du ou des premiers interrupteurs (59) et supprime le court-circuit à la terre.

2. Station de charge selon la revendication 1, dans laquelle l'actionnement du premier interrupteur (59) par le véhicule automobile (8) s'accompagne ou est précédé d'une mise à la terre de ce véhicule.

3. Station de charge selon la revendication 2, comportant en outre un troisième contact (56) raccordé en permanence à la terre.

4. Station de charge selon la revendication 2, dans laquelle l'un desdits premier et deuxième contacts (52, 54) est en permanence raccordé à la terre.

5. Station de charge selon l'une quelconque des revendications 1 à 4, dans lequel ledit premier interrupteur (59), lorsqu'il est actionné par ledit véhicule (8), supprime le court-circuit à la terre desdits premier (52) et deuxième (54) contacts électriques.

6. Station de charge (7) selon l'une quelconque des revendication 1 à 5, dans laquelle lesdits tampons sont mobiles en translation selon une direction normale à leur surface accessible respective.

7. Station de charge selon l'une quelconque des revendications 1 à 6, dans laquelle lesdits tampons (51-2, 51-4 ; 51') sont en outre mobiles depuis ladite deuxième position vers une troisième position où leurs parties conductrices sont alimentées électriquement.

8. Station de charge selon l'une quelconque des revendications 1 à 7, dans laquelle la structure rigide (72) est de forme adaptée à empêcher l'accès aux tampons (51-2, 51-4 ; 51') quand un véhicule (8) est en charge.

9. Station de charge (7) selon l'une quelconque des revendication 1 à 8, comportant :
au moins un premier et un deuxième contacts aériens ponctuels (52, 54 ; 52, 58, 54) destinés à fournir un courant de charge ; et
au moins un troisième contact aérien ponctuel (56) raccordé à la terre et court-circuitant au repos les premier et deuxième contacts à la terre, le troisième contact étant mobile.

10. Station de charge selon la revendication 9, dans laquelle les premier et deuxième contacts (52, 54 ; 52, 58, 54) sont reliés au circuit (3) de fourniture d'une tension de charge.

11. Système comportant
une station de charge selon l'une quelconque des revendication 1 à 10; et
un véhicule adapté à ladite station de charge.

## Patentansprüche

1. Ladestation (7) für ein Fahrzeug, die Folgendes aufweist:
eine starre Struktur (72), die mindestens zwei Pads (51 2, 51 4; 51') trägt, von denen eine zugängliche Oberfläche zumindest teilweise elektrisch leitend ist, wobei die zugängliche Oberfläche jedes Pads mindestens einen ersten (52) und einen zweiten (54) elektrischen Kontakt bildet, die mit einer Schaltung (3) zur Versorgung mit einer Ladespannung gekoppelt sind und jeweils eine zugängliche Oberfläche aufweisen, die zumindest teilweise elektrisch leitend ist;
mindestens einen ersten mechanischen Schalter (59), der von einem Fahrzeug (8) über ein bewegliches Element (56) betätigt werden kann,
mindestens einen zweiten Schalter (55) und einen dritten Schalter (55) zur Versorgung des ersten (52) und des zweiten (54) Kontakts, die mechanisch durch diese ersten (52) und zweiten (54) Kontakte betätigt werden können, die durch das Fahrzeug beweglich und bedienbar sind,
wobei jedes Pad von einer Stange (53) getragen wird, deren von dem Pad entferntes Ende einen der zweiten und dritten Schalter (55) betätigt,
wobei die Kontaktelemente zwischen mindestens einer ersten Bereitschaftsstellung, in der ihre leitenden Teile mit Masse kurzgeschlossen sind, und einer zweiten Stellung beweglich sind, in der das Fahrzeug (8) durch Betätigung des beweglichen Elements (56) das Öffnen des ersten Schalters oder der ersten Schalter (59) bewirkt und den Kurzschluss mit Masse aufhebt.

2. Ladestation nach Anspruch 1, wobei die Betätigung des ersten Schalters (59) durch das Kraftfahrzeug (8) von einer Erdung dieses Fahrzeugs begleitet wird oder ihr vorausgeht.

3. Ladestation nach Anspruch 2, die ferner einen dritten Kontakt (56) aufweist, der dauerhaft mit Masse verbunden ist.

4. Ladestation nach Anspruch 2, wobei einer der ersten und zweiten Kontakte (52, 54) dauerhaft mit Masse verbunden ist.

5. Ladestation nach einem der Ansprüche 1 bis 4, wobei der erste Schalter (59) bei Betätigung durch das Fahrzeug (8) den Kurzschluss des ersten (52) und zweiten (54) elektrischen Kontakts mit Masse aufhebt.

6. Ladestation (7) nach einem der Ansprüche 1 bis 5, wobei die Pads entlang einer Richtung senkrecht zu ihrer jeweiligen zugänglichen Oberfläche verschiebbar sind.

7. Ladestation nach einem der Ansprüche 1 bis 6, wobei die Pads (51-2, 51-4; 51') ferner von der zweiten Position in eine dritte Position bewegbar sind, in der ihre leitenden Teile elektrisch betrieben werden.

8. Ladestation nach einem der Ansprüche 1 bis 7, wobei die starre Struktur (72) eine Form aufweist, die geeignet ist, den Zugang zu den Pads (51-2, 51-4; 51') zu verhindern, wenn ein Fahrzeug (8) aufgeladen wird.

9. Ladestation (7) nach einem der Ansprüche 1 bis 8, aufweisend:
mindestens einen ersten und einen zweiten Punktluftkontakt (52, 54; 52, 58, 54) zur Versorgung mit einem Laststrom; und
mindestens einen dritten Punktluftkontakt (56), der mit Masse verbunden ist und den ersten und zweiten Kontakt im Bereitschaftszustand kurzschließt, wobei der dritte Kontakt beweglich ist.

10. Ladestation nach Anspruch 9, wobei der erste und der zweite Kontakt (52, 54; 52, 58, 54) mit der Ladespannungsversorgungsschaltung (3) gekoppelt sind.

11. System, das Folgendes aufweist
eine Ladestation nach einem der Ansprüche 1 bis 10; und
ein an diese Ladestation angepasstes Fahrzeug.

## Claims

1. Charging station (7) for a vehicle, including:
a rigid structure (72) carrying at least two pads (51 2, 51 4; 51'), an accessible surface of which is, at least in part, electrically conductive, the accessible surface of each pad constituting at least one first (52) and one second (54) electrical contact, coupled to a circuit (3) for supplying a charging voltage, having each an accessible surface at least in part electrically conductive;
at least one first mechanical switch (59) operable by a vehicle (8) via a movable element (56),
at least one second switch (55) and one third switch (55) for powering said first (52) and second (54) contacts, mechanically operable by these first (52) and second (54) contacts which are movable and operable by said vehicle,
each pad being carried by a rod (53) the end of which, distal from the pad, actuates one of said second and third switches (55)
said pads being movable between at least one first standby position where their conductive parts are shorted to ground, and a second position where as the vehicle (8) actuates the movable element (56), this causes the first switch or switches (59) to open and removes the shorting to ground.

2. Charging station according to claim 1, wherein the actuation of the first switch (59) by the motor vehicle (8) is accompanied or preceded by grounding this vehicle.

3. Charging station according to claim 2, further including a third contact (56) permanently connected to ground.

4. Charging station according to claim 2, wherein one of said first and second contacts (52, 54) is permanently connected to ground.

5. Charging station according to any one of claims 1 to 4, wherein said first switch (59), when actuated by said vehicle (8), removes the shorting to ground of said first (52) and second (54) electrical contacts.

6. Charging station (7) according to any one of claims 1 to 5, wherein said pads are translatable along a direction normal to their respective accessible surface.

7. Charging station according to any one of claims 1 to 6, wherein said pads (51-2, 51-4; 51') are further movable from said second position to a third position where their conductive parts are electrically powered.

8. Charging station according to any one of claims 1 to 7, wherein the rigid structure (72) has a shape adapted to prevent access to the pads (51-2, 51-4; 51') when a vehicle (8) is charging.

9. Charging station (7) according to any one of claims 1 to 8, including:
at least one first and one second point air contact (52, 54; 52, 58, 54) for supplying a load current; and
at least one third point air contact (56) connected to ground and shorting to ground the first and second contacts at standby, the third contact being movable.

10. Charging station according to claim 9, wherein the first and second contacts (52, 54; 52, 58, 54) are coupled to the charging voltage supply circuit (3).

11. System including
a charging station according to any one of claims 1 to 10; and
a vehicle adapted to said charging station.
